# DEMANDE DE BREVET EUROPEEN

(11) **EP 0 953 866 A1**
(43) Date de publication de la demande: **03.11.1999**
(21) Numéro de dépôt: 99401042.9
(22) Date de dépôt: 29.04.1999
(51) Int. Cl.: G02F 2/00, H04B 10/17

(54) **Dispositif de mise en forme de signaux optiques binaires**

(30) Priorité: 30.04.1998 FR 9805544
(71) Demandeur: ALCATEL, 75008 Paris (FR)
(72) Inventeur: Janz, Christopher, 92130 Issy les Moulineaux (FR); Dagens, Béatrice, 75014 Paris (FR); Chiaroni, Dominique, 92160 Antony (FR); Lavigne, Bruno, 92160 Antony (FR)
(74) Mandataire: Fournier, Michel Robert Marie

(57) **Abrégé**

Pour remettre en forme un signal optique d'entrée (E) modulé en puissance, tout en améliorant sa dynamique en puissance et le taux d'extinction du signal de sortie (S), le dispositif comporte :
- un premier étage (1) pour fournir, en fonction du signal d'entrée (E), un signal modulant (X) ayant des niveaux hauts stabilisés et
- un second étage (2) à structure interférométrique recevant le signal modulant (X) et une onde de sonde (M) modulée en puissance en opposition de phase par rapport à la modulation du signal modulant (X), les niveaux bas et hauts de l'onde de sonde (M) étant stabilisés.

Application aux transmissions optiques.

## Description

L'invention se situe dans le domaine des systèmes optoélectroniques utilisés pour la transmission ou le traitement optique de données numériques optiques.

Dans ces systèmes, les informations sont souvent sous la forme de données binaires représentées par des impulsions modulant une onde porteuse optique. Une valeur binaire est donc déterminée en fonction du niveau d'amplitude (ou de puissance) de l'onde optique modulée.

Au cours de la transmission, ce signal subit inévitablement des dégradations qui rendent plus difficile au niveau des récepteurs la détection des niveaux hauts et bas du signal reçu. Dans le domaine de l'amplitude, la qualité d'un signal optique est habituellement définie par deux paramètres : le rapport signal à bruit et le taux d'extinction. Le rapport signal à bruit est défini comme le rapport de la puissance optique du signal à la puissance de bruit dans une bande de longueur d'onde contenant la longueur d'onde de la porteuse du signal. Le taux d'extinction est défini comme le rapport des puissances correspondant respectivement aux niveaux hauts et bas du signal.

L'invention concerne un dispositif entièrement optique, c'est-à-dire sans conversion optique-électrique et inversement, qui permette d'améliorer la qualité d'un signal optique binaire, c'est-à-dire d'augmenter le taux d'extinction tout en conservant un rapport signal à bruit le plus grand possible. En d'autres termes, le dispositif doit être capable à partir d'un signal d'entrée modulé de mauvaise qualité de fournir un signal de sortie dont les niveaux hauts sont stabilisés avec une puissance optique constante, dont les niveaux bas ont une puissance très faible, tout en présentant un rapport signal à bruit très élevé.

Une solution déjà proposée pour augmenter le taux d'extinction consiste à utiliser une structure interférométrique, par exemple de type Mach-Zehnder. La structure se compose de deux branches véhiculant deux ondes cohérentes issues d'une onde de sonde et couplées pour former le signal de sortie. L'une des branches au moins comporte un milieu dont l'indice varie en fonction de la puissance optique qu'elle véhicule et un signal d'entrée est introduit dans cette branche. Les variations de puissance du signal d'entrée modulent alors l'indice et les deux ondes peuvent interférer de façon destructive ou constructive en fonction du niveau de puissance du signal d'entrée.

Une telle structure permet bien d'améliorer le taux d'extinction mais présente l'inconvénient que les conditions d'interférences destructive et constructive sont très contraignantes vis-à-vis du signal d'entrée, en particulier de sa longueur d'onde et surtout de son niveau de puissance à l'état haut. Il en résulte un fonctionnement très sensible aux fluctuations de ces paramètres.

Une amélioration du dispositif précédent a été décrite dans la demande de brevet européen EP-A-0813097 publiée le 17 décembre 1997. Le dispositif proposé comporte deux étages en cascade. Un premier étage joue un rôle d'écrêteur en fournissant en fonction du signal d'entrée un signal optique modulant dont les niveaux hauts sont stabilisés. Un second étage est du type interférométrique mentionné précédemment et reçoit comme signal d'entrée le signal modulant issu du premier étage.

Ainsi, le premier étage a pour rôle de supprimer les fluctuations éventuelles des niveaux hauts du signal modulant introduit dans la structure interférométrique. On obtiendra donc un fonctionnement stable de cette structure. En outre, lorsque le premier étage est constitué d'un convertisseur de longueur d'onde réalisé au moyen d'un amplificateur optique semi-conducteur, le dispositif est indépendant de la valeur ou des fluctuations de la longueur d'onde du signal optique d'entrée ainsi que de sa polarisation.

En pratique, le second étage est une structure interférométrique de type Mach-Zehnder dont les branches comportent ou sont constituées chacune d'un amplificateur optique semi-conducteur. On peut donc optimiser le fonctionnement de la structure en ajustant les courants de polarisation des amplificateurs de façon à obtenir en sortie un taux d'extinction maximum.

Ainsi, dans le cas où la structure interférométrique est prévue pour fonctionner en opposition de phase, les niveaux bas du signal de sortie correspondent aux niveaux hauts du signal modulant et donc aux niveaux bas du signal d'entrée. Comme l'onde de sonde a une puissance constante, l'égalisation des niveaux hauts du signal modulant va donc assurer l'égalisation des niveaux bas du signal de sortie. Ces niveaux bas sont en outre accompagnés d'un faible niveau de bruit produit par l'amplificateur dans lequel est injecté le signal modulant.

Cette solution présente cependant des limitations du taux d'extinction du signal de sortie ainsi que de la dynamique en puissance, c'est-à-dire des fluctuations acceptables des niveaux bas et hauts du signal d'entrée.

L'invention a pour but de remédier aux inconvénients du dispositif précédent. Dans ce but, l'invention a pour objet un dispositif de mise en forme d'un signal optique d'entrée ayant la forme d'une première onde optique modulée entre des niveaux bas et hauts de puissance, ledit dispositif comportant :
- un premier étage pour fournir, en fonction dudit signal d'entrée, un signal optique modulant ayant la forme d'une seconde onde optique modulée entre des niveaux bas et hauts de puissance, lesdits niveaux hauts étant stabilisés pour être peu dépendants des fluctuations desdits niveaux bas et hauts du signal d'entrée et
- un second étage comportant une structure interférométrique apte à recevoir ledit signal modulant et à fournir un signal de sortie résultant d'une interférence respectivement destructive ou constructive de première et seconde ondes cohérentes lorsque la puissance du signal modulant est égale respectivement audits niveaux hauts et bas, ladite structure comportant une première et une seconde branche guidante recevant par des premiers moyens de couplage respectivement une première et une seconde partie d'une troisième onde optique, lesdites branches étant munies respectivement d'un premier et d'un second amplificateur optique semi-conducteur, ledit premier amplificateur recevant par des seconds moyens de couplage ledit signal modulant, lesdits premiers et seconds amplificateurs fournissant respectivement lesdites première et seconde ondes cohérentes, ledit dispositif étant caractérisé en ce que ladite troisième onde optique est modulée entre des niveaux bas et hauts de puissance, en opposition de phase par rapport à la modulation dudit signal modulant et en ce que lesdits niveaux bas et hauts de ladite troisième onde optique sont stabilisés pour être peu dépendants des fluctuations desdits niveaux bas et hauts du signal d'entrée

Ainsi, grâce à la modulation de la puissance du troisième signal (c'est-à-dire du signal de sonde) en opposition de phase par rapport au signal modulant, on obtient une amélioration du taux d'extinction. Par ailleurs, l'égalisation des niveaux bas de ce troisième signal et des niveaux hauts du signal modulant assure la stabilité de l'interférence destructive et permet donc le maintien a une faible valeur des niveaux bas du signal de sortie.

Un problème concerne le phénomène de "chirp" transitoire, c'est-à-dire de la modulation de fréquence optique qui accompagne la variation de puissance de l'onde de sortie de la structure interférométrique.

Pour caractériser cette modulation, on introduit un paramètre α de "chirp" transitoire défini par :
α = 2P.(dϕ/dt)/(dP/dt) , où P est la puissance de l'onde modulée et ϕ sa phase exprimée en radiants.

Or, un modulateur à structure interférométrique en opposition de phase présente une valeur positive relativement importante de ce paramètre α alors que pour les transmissions par des fibres à coefficient de dispersion positif, le paramètre α devrait de préférence être nul voire négatif. C'est le cas par exemple des fibres dites "standard" pour une longueur d'onde de porteuse voisine de 1,55 µm. La solution proposée présente l'avantage de diminuer la valeur absolue du paramètre α.

Un autre aspect à considérer est celui de l'égalisation des niveaux hauts du signal de sortie. En effet, si le premier étage n'assure pas l'égalisation des niveaux bas du signal modulant (comme c'est le cas si on utilise un simple convertisseur de longueur d'ondes réalisé au moyen d'un amplificateur optique semi-conducteur), les fluctuations de ces niveaux bas peuvent entraîner des fluctuations des niveaux hauts du signal de sortie.

Ces fluctuations seront cependant atténuées si la structure interférométrique est placée dans des conditions telles que l'indice de la branche qui reçoit le signal modulant soit peut dépendant des fluctuations des niveaux bas de ce signal. Cet indice est en fait celui de l'amplificateur optique semi-conducteur de la branche et comme l'indice de l'amplificateur est directement lié à son gain, cela revient à dire que ce gain doit être peut dépendant de ces fluctuations.

Pour satisfaire à cette condition, on pourrait imposer au niveau haut de l'onde de sonde une puissance suffisamment faible pour maintenir l'amplificateur en régime linéaire, indépendamment des fluctuations possible des niveaux bas du signal modulant. Cette solution n'est toutefois pas favorable au taux d'extinction du signal de sortie.

Selon une autre possibilité qui permet d'éviter cet inconvénient, la puissance des niveaux hauts de l'onde de sonde est au contraire choisie suffisamment élevée pour rendre les fluctuations des niveaux bas du signal modulant négligeables par rapport à la puissance optique totale injectée dans l'amplificateur.

Aussi, selon une caractéristique supplémentaire de l'invention, on prévoit que les niveaux hauts de la troisième onde optique sont ajustés pour maintenir les amplificateurs de la structure interférométrique en régime de saturation de gain.

D'autres aspects et avantages de l'invention apparaîtront dans la suite de la description en référence aux figures.
- la figure 1 représente schématiquement un mode de réalisation préféré du dispositif selon l'invention.
- les figures 2 et 3 sont des courbes permettant d'expliquer le principe de fonctionnement du dispositif de la figure 1.

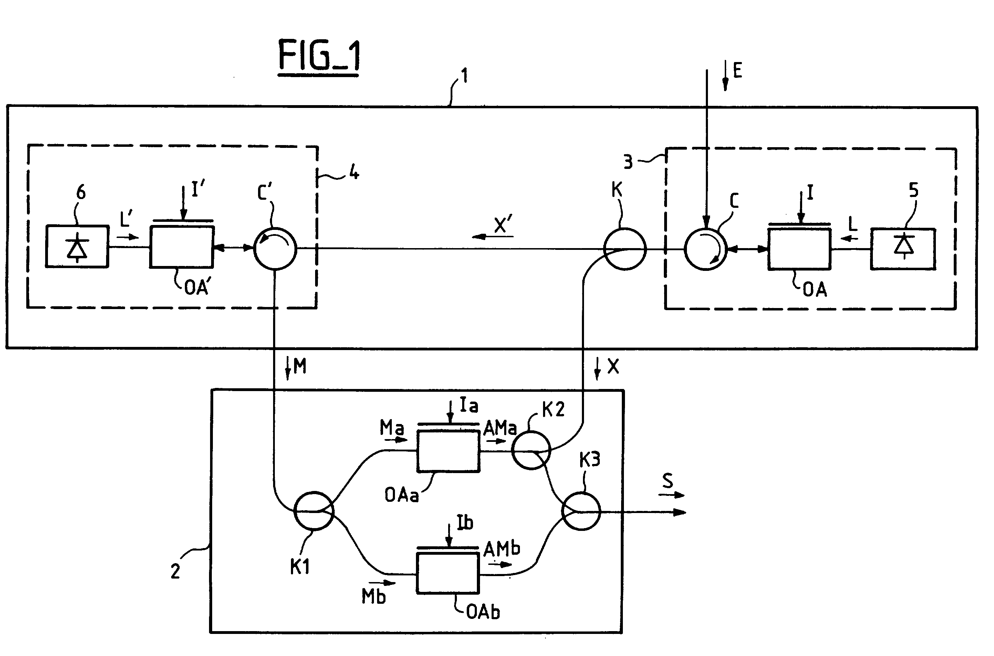

Le dispositif représenté à la figure 1 comprend un premier étage 1 recevant un signal optique d'entrée E qui est destiné à être mis en forme par le dispositif. Ce signal E est de type binaire ayant la forme d'une première onde optique modulée entre des niveaux bas et hauts de puissance. Le premier étage 1 fournit à un second étage 2 un signal modulant X et un signal de sonde M. Les signaux X et M sont respectivement sous la forme de seconde et troisième ondes porteuses optiques modulées entre des niveaux bas et hauts de puissance.

Le premier étage 1 comporte un premier convertisseur de longueur d'onde 3 recevant le signal d'entrée E et fournissant un signal de sortie dont sera extrait le signal modulant X. Le convertisseur 3 comporte un amplificateur optique semi-conducteur OA dont une première face est couplée à un oscillateur laser 5 fournissant la seconde onde porteuse L. L'autre face de l'amplificateur OA est reliée à un circulateur C comportant un premier et un second port prévus respectivement pour recevoir le signal d'entrée E et l'injecter dans l'amplificateur OA. Un troisième port du circulateur C fournit par l'intermédiaire d'un coupleur 1 vers 2 K le signal modulant X et un signal X' dirigé à l'entrée d'un second convertisseur de longueur d'onde 4 du premier étage.

Le second convertisseur 4 comporte également un amplificateur optique semi-conducteur OA' dont une première face est couplée à un second oscillateur laser 6 fournissant la troisième onde porteuse L'. L'autre face de l'amplificateur OA' est reliée à un circulateur C' comportant un premier et un second port prévus respectivement pour recevoir l'onde X' et l'injecter dans l'amplificateur OA'. Un troisième port du circulateur C' fournit l'onde de sonde M.

Les amplificateurs OA et OA' reçoivent respectivement les courants de pompe I et I'.

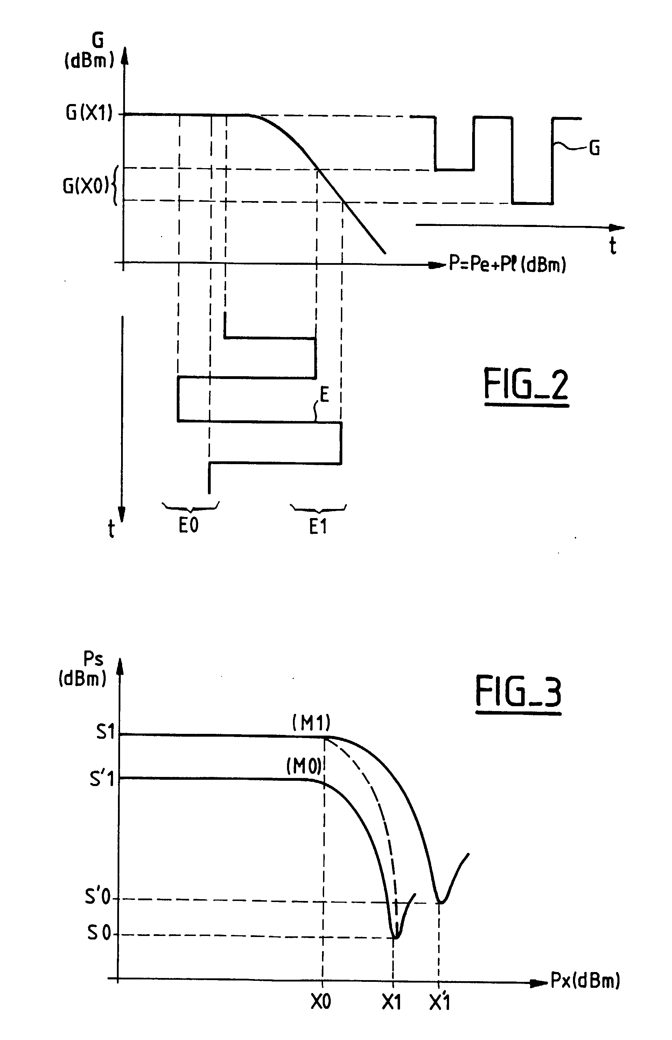

Le fonctionnement du premier convertisseur 3 peut être expliqué à l'aide de la figure 2 qui montre schématiquement les variations du gain G de l'amplificateur OA en fonction de la puissance optique totale P qu'il reçoit. La puissance P est la somme de la puissance Pl de l'onde porteuse L et de la puissance Pe du signal d'entrée E. La modulation de la puissance du signal d'entrée E entre les niveaux bas E0 et hauts E1 a pour effet de moduler le gain G entre des valeurs hautes G(X1) et des valeurs basses G(X0). Par un choix approprié de la puissance Pl de l'onde L fournie par l'oscillateur 5, on peut imposer que les fluctuations des niveaux bas E0 du signal E n'écarte pas l'amplificateur d'un mode de fonctionnement linéaire. Ainsi, la valeur haute du gain G(X1) reste pratiquement constante, indépendamment des fluctuations des niveaux bas E0.

La modulation du gain G s'applique à l'onde porteuse L de sorte que l'amplificateur OA émet en direction du circulateur C une onde modulée en puissance en opposition de phase par rapport à E. Le signal modulant X présente les mêmes caractéristiques avec des niveaux hauts X1 qui sont pratiquement constants mais des niveaux bas X0 qui reproduisent les fluctuations des niveaux hauts E1 du signal d'entrée E. Il en est de même pour le signal X'.

Le fonctionnement du second convertisseur 4 peut être expliqué de la même façon à la différence près que son signal d'entrée X' a des niveaux hauts égalisés par le premier convertisseur 3. Il en résulte que le signal de sonde M fourni par le convertisseur 4 présente des niveaux hauts et des niveaux bas égalisés. Par ailleurs le signal M est modulé en phase par rapport à E.

Le second étage 2 du dispositif de la figure 1 comporte une structure interférométrique de type Mach-Zehnder constituée de deux branches guidantes munies ou constituées respectivement d'amplificateurs optiques semi-conducteurs OAa, OAb dans lesquels sont injectés respectivement les courants de pompe Ia et Ib.

Un premier coupleur en Y K1 permet de coupler une extrémité de chacune de ces branches à la sortie du second convertisseur 4. Un second coupleur en Y K2 est disposé de façon à permettre l'introduction du signal modulant X dans le premier amplificateur OAa. Un troisième coupleur en Y K3 relié au coupleur K2 et au second amplificateur OAb est disposé de façon à fournir un signal de sortie S.

Les ondes Ma et Mb issues du coupleur K1 sont donc extraites de l'onde de sonde M et ont la même puissance et la même phase optique. Elles sont alors amplifiées respectivement par les amplificateurs OAa et OAb pour fournir les ondes amplifiées AMa et AMb dont le couplage forme le signal S.

Les courants Ia et Ib sont ajustés de façon à ce que le signal de sortie S résulte d'une interférence destructive des ondes AMa et AMb pour les niveaux hauts de puissance du signal modulant X.

Les niveaux hauts du signal modulant X et de l'onde de sonde M peuvent par ailleurs être fixés à des valeurs déterminées en ajustant les courants de pompe I et I' respectivement des amplificateurs OA et OA' des convertisseurs 3 et 4.

Le fonctionnement du second étage 2 va maintenant être expliqué au moyen des courbes de la figure 3. Sur la figure apparaissent en traits pleins deux courbes représentant les variations de la puissance Ps (exprimée en dBm) de l'onde de sortie S en fonction de la puissance Px (exprimée en dBm) du signal modulant X pour deux valeurs différentes M0 et M1 de la puissance de l'onde de sonde M supposée pour l'instant non modulée. Les courbes représentées correspondent à des niveaux de puissance M0 et M1 de l'onde de sonde, avec M0 inférieur à M1, mais suffisamment élevés pour placer les amplificateurs AMa et AMb en régime de saturation de gain.

Pour le niveau de puissance M0, la puissance Ps conserve une valeur constante S'1 pour les faibles valeurs de la puissance Px. A partir d'une certaine valeur de Px, Ps décroît lorsque Px croît pour atteindre un minimum S0 pour une valeur correspondante X1 de Px. Au-delà de cette valeur X1, la puissance Ps croît à nouveau.

Pour le niveau de puissance supérieure M1 de l'onde de sonde, on obtient une courbe analogue décalée vers la droite et vers le haut de sorte que la valeur maximale S1 de la puissance Ps obtenue pour les faibles valeurs de la puissance Px est supérieure à la valeur maximale correspondante S'1 de la première courbe . La puissance minimale S'0 est en pratique voisine de la puissance minimale S0 de la première courbe mais elle est obtenue pour une valeur X'1 de puissance du signal modulant X supérieure à X1.

On constate donc que si l'on maintient l'onde de sonde M à une puissance constante, le taux d'extinction du signal de sortie ne peut guère être amélioré en jouant sur la puissance d'une onde de sonde continue sans augmenter la puissance du signal X nécessaire pour effectuer la modulation. Si par contre, conformément à l'invention, la puissance de l'onde de sonde est modulée en opposition de phase par rapport à la modulation entre les niveaux X0 et X1 du signal modulant X, la puissance de sortie Ps sera modulée entre le niveau haut S1 de la seconde courbe et le niveau bas S0 de la première courbe (voir le tracé en traits discontinus) . On obtient donc une amélioration du taux d'extinction et de la dynamique en puissance par rapport à la réalisation antérieure.

Ce résultat pourra encore être amélioré si les amplificateurs OA et OA' des convertisseurs de longueur d'onde 3 et 4 sont des amplificateurs optiques semi-conducteurs à gain stabilisé.

De plus, par rapport à la solution classique sans modulation de la sonde, la branche supérieure de la structure interférométrique reçoit une puissance optique totale dont la profondeur de modulation est réduite, ce qui contribue à réduire le paramètre de "chirp" α du signal de sortie S. En outre, la branche inférieure reçoit une puissance optique modulée qui confère à l'onde AMb un paramètre de "chirp" négatif, ce qui contribue également à réduire le paramètre de "chirp" α du signal S.

L'invention n'est pas limitée au mode de réalisation qui vient d'être décrit mais couvre également de nombreuses variantes équivalentes. Par exemple, le signal modulant X pourrait être injecté dans l'amplificateur OAa avec le même sens de propagation que l'onde Ma. De même, la structure interférométrique de type Mach-Zehnder pourrait être remplacée par une structure de type Michelson. Egalement, dans la perspective d'une réalisation intégrée, on pourra remplacer les circulateurs C et C' par de simples coupleurs.

## Revendications

1. Dispositif de mise en forme d'un signal optique d'entrée (E) ayant la forme d'une première onde optique modulée entre des niveaux bas et hauts (E0, E1) de puissance, ledit dispositif comportant :
- un premier étage (1) pour fournir, en fonction dudit signal d'entrée (E), un signal optique modulant (X) ayant la forme d'une seconde onde optique (L) modulée entre des niveaux bas et hauts (X0, X1) de puissance, lesdits niveaux hauts (X1) étant stabilisés pour être peu dépendants des fluctuations desdits niveaux bas et hauts (E0, E1) du signal d'entrée (E) et
- un second étage (2) comportant une structure interférométrique apte à recevoir ledit signal modulant (X) et à fournir un signal de sortie (S) résultant d'une interférence respectivement destructive ou constructive de première et seconde ondes cohérentes (AMa, AMb) lorsque la puissance (Px) du signal modulant (X) est égale respectivement auxdits niveaux hauts (X1) et bas (X0), ladite structure comportant une première et une seconde branche guidante recevant par des premiers moyens de couplage (K1) respectivement une première et une seconde partie (Ma, Mb) d'une troisième onde optique (M), lesdites branches étant munies respectivement d'un premier et d'un second amplificateur optique semi-conducteur (OAa, OAb), ledit premier amplificateur (OAa) recevant par des seconds moyens de couplage (K2) ledit signal modulant (X), lesdits premiers et seconds amplificateurs (OAa, OAb) fournissant respectivement lesdites première et seconde ondes cohérentes (AMa, AMb), ledit dispositif étant caractérisé en ce que ladite troisième onde optique (M) est modulée entre des niveaux bas et hauts (M0, M1) de puissance, en opposition de phase par rapport à la modulation dudit signal modulant (X) et en ce que lesdits niveaux bas et hauts (M0, M1) de ladite troisième onde optique (M) sont stabilisés pour être peu dépendants des fluctuations desdits niveaux bas et hauts (E0, E1) du signal d'entrée (E).

2. Dispositif selon la revendication 1, caractérisé en ce que lesdits niveaux hauts (M1) de ladite troisième onde optique (M) sont ajustés pour maintenir lesdits premiers et seconds amplificateurs (OAa, OAb) en régime de saturation de gain.

3. Dispositif selon l'une des revendications 1 ou 2, caractérisé en ce que ledit premier étage (1) comporte un premier convertisseur de longueur d'onde (3) muni d'un troisième amplificateur semi-conducteur (OA) apte à recevoir ledit signal d'entrée (E) ainsi que ladite seconde onde optique (L), en ce que ledit troisième amplificateur (OA) et/ou ledit signal d'entrée (E) sont dimensionnés pour placer ledit troisième amplificateur (OA) en état de saturation de gain lorsque le signal d'entrée (E) est à l'état haut (E1) et en ce que ledit signal modulant (X) est une première partie de ladite seconde onde optique (L) amplifiée par ledit troisième amplificateur (OA).

4. Dispositif selon la revendications 3, caractérisé en ce que ledit premier étage (1) comporte un second convertisseur de longueur d'onde (4) muni d'un quatrième amplificateur semi-conducteur (OA') apte à recevoir une seconde partie (X') de ladite seconde onde optique (L) amplifiée par ledit troisième amplificateur (OA) ainsi qu'une quatrième onde optique (L'), en ce que ledit quatrième amplificateur (OA') et/ou ladite seconde partie d'onde (X') sont dimensionnés pour placer ledit quatrième amplificateur (OA') en état de saturation de gain lorsque ladite seconde partie d'onde (X') est à l'état haut et en ce que ladite troisième onde optique (M) est constituée par ladite quatrième onde optique (L') amplifiée par ledit quatrième amplificateur (OA').

5. Dispositif selon l'une des revendications 1 à 4, caractérisé en ce que lesdits premier et second moyens de couplage (K1, K2) sont disposés de façon à ce que ledit premier amplificateur (OAa) fournisse ladite première onde auxiliaire (AMa) et reçoive ledit signal modulant (X) selon des sens de propagation opposés.

6. Dispositif selon la revendication 5, caractérisé en ce que lesdits troisième et/ou quatrième amplificateurs (OA, OA') sont des amplificateurs optiques semi-conducteurs à gain stabilisé.
